# FASCICULE DE BREVET EUROPEEN

(11) **EP 1 247 546 B1**
(45) Date de publication et mention de la délivrance du brevet: **16.11.2005**
(21) Numéro de dépôt: 02290716.6
(22) Date de dépôt: 21.03.2002
(51) Int. Cl.: A62C 3/08

(54) **Procédé et installation de traitement d'un feu dans un compartiment d'aéronef équipé d'une telle installation**
Verfahren und Vorrichtung zur Brandbekämpfung in einem Flugzeugabteil, das mit dieser Vorrichtung ausgerüstet ist
Process and system for fire-fighting in a plane compartment equipped with said system

(30) Priorité: 02.04.2001 FR 0104450
(43) Date de publication de la demande: 09.10.2002
(73) Titulaire: L'AIR LIQUIDE, Société Anonyme à Directoire et Conseil de Surveillance pour l'Etude et l'Exploitation des, 75321 Paris Cedex 07 (FR)
(72) Inventeur: Lessi, Stéphane, 38000 Grenoble (FR); Vandroux, Olivier, 38100 Grenoble (FR)
(74) Mandataire: Le Moenner, Gabriel

(56) Documents cités:
- US-A- 5 040 611
- US-A- 5 845 714
- US-A- 5 918 680
- US-A- 6 003 608

## Description

La présente invention concerne un procédé et un dispositif de traitement d'un feu dans un compartiment d'avion.

L'invention vise non seulement l'aviation civile de transport de passagers, mais également l'aviation de transport de fret, ainsi que l'aviation militaire. Elle concerne la protection, à l'égard des feux, de compartiments susceptibles de recevoir des bagages ou du matériel, tels que les soutes d'avions, ou encore de baies électroniques, qui contiennent les interfaces électriques de l'avion.

Lorsqu'un feu se déclare dans un tel compartiment, au cours d'un vol, il convient de le circonscrire rapidement, afin que l'avion parvienne à destination, sans que l'intégrité physique des passagers et de l'équipage ne soit mise en danger.

A cet effet, il est connu de munir le compartiment que l'on désire protéger, de capteurs susceptibles de détecter, soit la fumée provoquée par le feu, soit l'augmentation de température liée à la combustion. En cas de feu, ces capteurs génèrent un signal d'alarme, qui est transmis au pilote. Ce dernier initie alors la mise en route d'un dispositif d'extinction du feu qui comprend, dans l'état de la technique connue, plusieurs bouteilles contenant un agent extincteur sous pression, commercialisé sous la référence "Halon 1301".

Lorsque le pilote active le dispositif d'extinction, l'agent extincteur est vaporisé dans le compartiment, par l'intermédiaire de lignes de distribution, terminées par des buses débouchant dans le compartiment précité. Il s'agit alors d'obtenir une concentration en agent extincteur dans l'air du compartiment, qui soit comprise entre 3 et 5%.

Puis, lors de la suite du vol, un débit permanent, plus faible, d'agent extincteur est admis en continu dans le compartiment. Une telle mesure permet de compenser d'éventuelles pertes liées aux fuites existant dans l'avion.

Cette solution connue présente cependant certains inconvénients.

En effet, bien que l'agent extincteur utilisé possède une excellente capacité de protection contre le feu, et ne présente qu'un faible risque toxique, puisqu'il est utilisé à de faibles concentrations, il s'avère dangereux pour la couche d'ozone stratosphérique.

Par ailleurs, la durée de protection du compartiment dépend directement du volume d'agent extincteur embarqué. Il n'est donc pas possible d'assurer, par ce biais, un degré de sécurité suffisant pour des vols de très longue durée, nécessitant des temps de déroutement importants, par exemple de huit heures. Ceci impliquerait alors l'embarquement d'un volume d'agent extincteur considérable, qui serait inacceptable du fait de sa masse et de son encombrement.

Afin de pallier ces différents inconvénients, l'invention se propose de mettre en oeuvre un procédé qui, tout en assurant un contrôle fiable d'un feu, pendant de longues durées, ne soit sensiblement pas dangereux l'environnement, en particulier en ce qui concerne la destruction de la couche d'ozone et l'effet de serre.

A cet effet, elle a pour objet un procédé de traitement d'un feu dans un compartiment d'avion, comprenant une phase de détection de la présence du feu, et une phase d'extinction de ce feu, caractérisé en ce que la phase d'extinction comprend une phase de projection, dans le compartiment, d'un fluide d'extinction, ainsi qu'une phase de génération d'air enrichi en gaz inerte, à partir d'une source d'air comprimé interne à l'avion, et une phase d'admission d'au moins une partie de cet air enrichi dans le compartiment.

La projection du fluide d'extinction, qui est avantageusement à base d'eau, permet d'abaisser de façon immédiate la température régnant dans le compartiment touché par le feu. Cette projection garantit ainsi une action instantanée sur le feu, ce qui contribue à le contrôler efficacement.

Par ailleurs, l'admission d'air enrichi en gaz inerte, principalement en azote, donc appauvri en oxygène, assure le maintien d'une faible concentration d'oxygène dans le compartiment, qui est suffisamment basse pour empêcher le feu, une fois contrôlé par la projection du fluide d'extinction, de se propager au reste du compartiment.

Etant donné que l'air enrichi en gaz inerte est produit en continu à partir d'air comprimé interne à l'avion, cet air enrichi est disponible pendant une durée égale à celle du vol, de sorte que l'inertage du compartiment peut être assuré pendant une durée de vol aussi longue que souhaitée. Le procédé de l'invention induit donc un avantage substantiel par rapport à l'art antérieur, dans lequel l'agent d'extinction embarqué est disponible uniquement en quantité déterminée.

En outre, le procédé de l'invention ne nécessite sensiblement aucune maintenance, contrairement au système de stockage de l'art antérieur nécessitant des vérifications fréquentes, ou bien des remplissages périodiques.

Le dispositif d'extinction de l'invention possède une masse et un encombrement réduits, de sorte qu'il ne restreint pas de manière notable le volume de bagages susceptible d'être embarqué dans la compartiment.

A cet égard, il convient de noter que, bien qu'il soit envisageable de traiter le feu uniquement au moyen d'un liquide, tel que de l'eau, une telle solution serait inacceptable, étant donné qu'elle devrait faire appel à un volume considérable de ce liquide.

Enfin, l'invention permet de faire appel à des agents d'extinction et d'inertage qui n'ont sensiblement pas d'impact sur l'environnement, en particulier sur la couche d'ozone et l'effet de serre.

Selon d'autres caractéristiques de l'invention :
- l'air enrichi en gaz inerte possède une teneur en gaz inerte comprise entre 84 et 95%, de préférence entre 88 et 91% ;
- le fluide d'extinction est un liquide qu'on projette ce liquide d'extinction sous forme atomisée dans le compartiment, par l'intermédiaire d'un gaz sous pression ;
- le liquide contient de l'eau et le gaz inerte est composé essentiellement d'azote.

L'invention a également pour objet une installation de traitement d'un feu dans un compartiment d'avion, comprenant des moyens de détection de la présence du feu, et des moyens d'extinction de ce feu, dans laquelle les moyens d'extinction comprennent des moyens de projection, à l'intérieur dudit compartiment, d'un fluide d'extinction, des moyens de génération d'un air enrichi en gaz inerte, à partir d'une source d'air comprimé interne à l'avion, et des moyens d'admission d'au moins une partie de cet air enrichi, à l'intérieur du compartiment.

L'invention a également pour objet un aéronef équipé d'une telle installation.

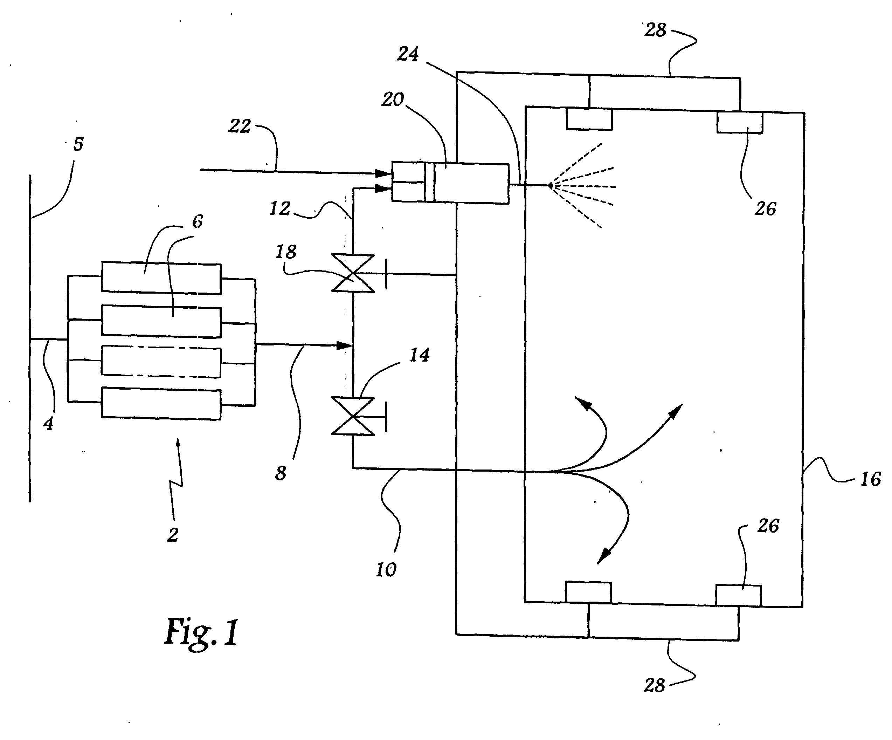

L'invention va être décrite ci-après, en référence à la figure unique ci-annexée, donnée uniquement à titre d'exemple non limitatif, cette figure étant une vue schématique illustrant un dispositif de traitement d'un feu, conforme à l'invention.

Le dispositif d'extinction, illustré sur la figure, comprend un appareil séparateur 2, permettant de générer de l'air enrichi en gaz inerte. Cet appareil est mis en relation, par une ligne 4, avec une source 5 d'air comprimé, interne à un avion. Une telle source est par exemple formée par le circuit de conditionnement d'air de l'avion, ou bien encore par un prélèvement au niveau dés étages de compression des moteurs de celui-ci.

L'appareil séparateur 2, de type connu, est par exemple conforme à un de ceux commercialisés par la société L'AIR LIQUIDE. Il fait appel à plusieurs membranes de perméation 6, disposées en parallèle, en faisant référence à l'écoulement de l'air qui y circule.

A titre de variante, l'air enrichi en gaz inerte peut être produit par l'intermédiaire d'un appareil séparateur utilisant des tamis moléculaires d'adsorption. Dans ce cas, il est par exemple conforme à un de ceux commercialisés par la société LITTON.

La sortie de l'appareil 2, qui est formée par une conduite 8, permet d'acheminer un air, dont la teneur en azote est comprise entre environ 84 et 95%, typiquement entre 88 et 91%, alors que sa teneur en oxygène est inférieure à 12%, typiquement comprise entre 9 et 12%, à une pression n'excédant pas 5 bars et avec un débit de l'ordre de quelques litres par minutes. Cette conduite 8 est mise en communication avec deux lignes de dérivation 10, 12. La première ligne 10, qui est munie d'une vanne 14, débouche dans un compartiment de l'avion, qui est par exemple une soute 16.

Par ailleurs, la deuxième ligne 12, qui est pourvue d'une vanne 18, est mise en communication avec un réservoir 20 contenant un fluide d'extinction, qui est de l'eau dans l'exemple décrit et représenté. Ce réservoir est également alimenté, par une conduite 22, au moyen d'air sous pression. Une ligne 24, formant la sortie du réservoir 20, débouche à l'intérieur de la soute 16, et se trouve munie, à son extrémité opposée au réservoir 20, de buses d'atomisation non représentées.

Les parois de la soute 16 sont équipées de capteurs 26, qui sont mis en relation, par des conduites 28, avec la vanne 18 de contrôle de l'air enrichi en gaz inerte, s'écoulant dans la ligne 12. Ces capteurs, de type connu, sont adaptés pour détecter la fumée produite par un feu, ou bien encore l'augmentation de température induite par ce dernier.

Le fonctionnement du dispositif de traitement d'un feu, décrit ci-dessus, va maintenant être explicité.

Lorsqu'un feu se déclare, les capteurs 26 en signalent l'existence au pilote. Celui-ci initie alors la projection par atomisation, à l'intérieur de la soute 16, de l'eau contenue dans le réservoir 20. Une telle projection est, au moins dans un premier temps, assurée par l'intermédiaire de l'air sous pression véhiculé par la conduite 22. Il est à noter que l'admission de cette eau peut être induite de façon automatique, dès l'activation des capteurs.

Par ailleurs, l'appareil 2 est mis en marche, soit par le pilote, soit de manière automatique. De l'air enrichi en gaz inerte, principalement en azote, mais aussi en argon, est alors admis à l'intérieur de la soute, via la conduite 8 et la ligne 10. Cet air enrichi en gaz inerte peut également être acheminé via la ligne 12, en direction du réservoir 20. Il contribue alors à l'atomisation de l'eau contenue dans le réservoir 20, en complément, ou bien en remplacement, de l'air sous pression circulant dans la conduite 22 et provenant, lui aussi, des moteurs.

L'eau introduite par la ligne 24, permet d'éteindre partiellement les flammes ou points d'ignition proches, et d'abaisser immédiatement la température régnant dans la soute 16. Par ailleurs, l'air enrichi en gaz inerte, admis dans la soute 16 par la ligne 10 et se répandant dans la soute, contribue à y maintenir une concentration en oxygène suffisamment basse, pour empêcher le feu de reprendre et/ou se propager dans la soute 16.

L'invention n'est pas limitée aux exemples décrits et représentés. Ainsi, le fluide d'extinction peut être un liquide autre que l'eau, ou bien encore un gaz inerte, tel que l'azote, l'argon, du dioxyde de carbone, ou des mélanges de ces gaz, stocké à une pression très élevée, puis admis détendu dans le compartiment que l'on désire protéger.

La quantité de fluide d'extinction délivrée, le temps de distribution de ce dernier, ainsi que le débit d'air enrichi en azote injecté, dépendent de différents paramètres. Il s'agit, entre autres, des dimensions de la soute, de la pression de l'air disponible, ainsi que du nombre de modules de séparation d'air.

Il est possible de réaliser une étape principale de distribution du fluide d'extinction, immédiatement après l'activation des capteurs, puis de procéder à des distributions supplémentaires, de durée plus faible. Par ailleurs, l'admission d'air enrichi en gaz inerte est avantageusement maintenue durant toute la durée du vol, jusqu'à l'atterrissage de l'appareil.

Quoique l'invention ait été décrite en relation avec des modes de réalisation particuliers elle est également applicable à d'autres types de véhicules de transport, terrestres ou navals.

## Revendications

1. Procédé de traitement d'un feu dans un compartiment (16) d'avion, comprenant une phase de détection (par 26) de la présence du feu, et une phase d'extinction de ce feu, **caractérisé en ce que** la phase d'extinction comprend une phase de projection (par 24), dans le compartiment (16), d'un fluide d'extinction, ainsi qu'une phase de génération (par 2) d'air enrichi en gaz inerte, à partir d'une source d'air comprimé (5) interne à l'avion, et une phase d'admission (par 10) d'au moins une partie de cet air enrichi dans le compartiment (16).

2. Procédé selon la revendication 1, **caractérisé en ce qu'**on génère l'air enrichi en gaz inerte en faisant circuler ledit air comprimé dans des membranes perméables (6).

3. Procédé selon la revendication 1, **caractérisé en ce qu'**on génère l'air enrichi en gaz inerte en faisant circuler l'air comprimé à travers des tamis moléculaires.

4. Procédé selon l'une des revendications 1 à 3, **caractérisé en ce que** l'air enrichi en gaz inerte possède une teneur en gaz inerte comprise entre 84 et 95%, de préférence entre 88 et 91%.

5. Procédé selon l'une des revendications précédentes, **caractérisé en ce qu'**on admet dans le compartiment sensiblement la totalité dudit air enrichi en gaz inerte.

6. Procédé selon l'une des revendications précédentes, **caractérisé en ce que** le fluide d'extinction est un liquide et **en ce qu'**on projette ce liquide d'extinction sous forme atomisée dans le compartiment (16), par l'intermédiaire d'un gaz sous pression.

7. Procédé selon la revendication 6 ou 7, **caractérisé en ce que** le fluide d'extinction est de l'eau.

8. Procédé selon la revendication 6, **caractérisé en ce qu'**on utilise une fraction dudit air enrichi en gaz inerte, afin de projeter ledit liquide d'extinction sous forme atomisée.

9. Installation de traitement d'un feu dans un compartiment (16) d'avion, comprenant des moyens de détection (26) de la présence dudit feu, et des moyens d'extinction (10, 20, 24) de ce feu, **caractérisée en ce que** les moyens d'extinction comprennent des moyens de projection (20, 24), à l'intérieur dudit compartiment (16), d'un fluide d'extinction, des moyens de génération (2) d'un air enrichi en gaz inerte, à partir d'une source d'air comprimé (5) interne à l'avion, et des moyens d'admission (8, 10) d'au moins une partie de cet air enrichi, à l'intérieur du compartiment (16).

10. Installation selon la revendication 9, **caractérisée en ce que** les moyens de génération comprennent un appareil de séparation (2) à membranes perméables (6).

11. Installation selon la revendication 9, **caractérisée en ce que** les moyens de génération comprennent un appareil de séparation à tamis moléculaires.

12. Installation selon l'une des revendications 9 à 11, **caractérisée en ce que** les moyens de projection comprennent un réservoir (20) contenant le fluide d'extinction, et une ligne de fourniture (24), s'étendant à partir du réservoir et débouchant dans le compartiment (16).

13. Installation selon la revendication 12, **caractérisée en ce que** le réservoir (20) est mis en communication avec au moins un moyen d'amenée (12, 22) d'un gaz sous pression.

14. Installation selon la revendication 13, **caractérisée en ce qu'**au moins un moyen d'amenée (12) est mis en relation avec les moyens de génération (2) d'air enrichi en gaz inerte.

15. Installation selon l'une des revendications 12 à 14, **caractérisée en ce que** le réservoir (20) contient de l'eau.

16. Aéronef équipé d'une installation selon l'une des revendications 9 à 15.

## Patentansprüche

1. Verfahren zur Brandbekämpfung in einem Flugzeugabteil (16), das eine Erfassungsphase (über 26) der Gegenwart des Brands und eine Phase des Löschens dieses Brands umfasst, **dadurch gekennzeichnet, dass** die Löschphase eine Phase des Spritzens (über 24) in das Flugzeugabteil (16) eines Löschmittels sowie eine Phase des Erzeugens (durch 2) von Luft, die mit Inertgas ausgehend von einer Druckluftquelle (5) innerhalb des Flugzeugs angereichert ist, sowie eine Phase des Einlassens (über 10) mindestens eines Teils dieser angereicherten Luft in das Flugzeugabteil (16) umfasst.

2. Verfahren nach Anspruch 1, **dadurch gekennzeichnet, dass** man die mit Inertgas angereicherte Luft erzeugt, indem man die Druckluft in durchlässigen Membranen (6) zirkulieren lässt.

3. Verfahren nach Anspruch 1, **dadurch gekennzeichnet, dass** man die mit Inertgas angereicherte Luft erzeugt, indem man die Druckluft durch Molekularsiebfilter zirkulieren lässt.

4. Verfahren nach einem der Ansprüche 1 bis 3, **dadurch gekennzeichnet, dass** die mit Inertgas angereicherte Luft einen Gehalt an Inertgas zwischen 84 und 95 %, vorzugsweise zwischen 88 und 91 % besitzt.

5. Verfahren nach einem der vorhergehenden Ansprüche, **dadurch gekennzeichnet, dass** man im Wesentlichen die ganze mit Inertgas angereicherte Luft in das Flugzeugabteil einlässt.

6. Verfahren nach einem der vorhergehenden Ansprüche, **dadurch gekennzeichnet, dass** das Löschmittel eine Flüssigkeit ist, und dadurch, dass man diese Löschflüssigkeit in zerstäubter Form in dem Flugzeugabteil (16) über ein Gas unter Druck verspritzt.

7. Verfahren nach Anspruch 6 oder 7, **dadurch gekennzeichnet, dass** das Löschmittel Wasser ist.

8. Verfahren nach Anspruch 6, **dadurch gekennzeichnet, dass** man einen Bruchteil der mit Inertgas angereicherten Luft verwendet, um die Löschflüssigkeit in zerstäubter Form zu verspritzen.

9. Anlage zur Brandbekämpfung in einem Flugzeugabteil (16), die Erfassungsmittel (26) der Gegenwart des Brands sowie Löschmittel (10, 20, 24) dieses Brands umfasst, **dadurch gekennzeichnet, dass** die Löschmittel Mittel zum Spritzen (20, 24) im Inneren des Flugzeugabteils (16) für ein Löschmittel umfassen, Mittel zum Erzeugen (2) einer mit Inertgas angereicherten Luft ausgehend von einer Druckluftquelle (5) innerhalb des Flugzeugs und Mittel zum Einlassen (8, 10) mindestens eines Teils dieser angereicherten Luft in das Innere des Flugzeugabteils (16).

10. Anlage nach Anspruch 9, **dadurch gekennzeichnet, dass** die Erzeugungsmittel ein Abscheidungsgerät (2) mit durchlässigen Membranen (6) umfassen.

11. Anlage nach Anspruch 9, **dadurch gekennzeichnet, dass** die Erzeugungsmittel ein Abscheidungsgerät mit Molekularsiebfilter umfassen.

12. Anlage nach einem der Ansprüche 9 bis 11, **dadurch gekennzeichnet, dass** die Spritzmittel einen Behälter (20) umfassen, der ein Löschmittel enthält, und eine Zuführleitung (24), die sich ausgehend von dem Behälter erstreckt und in das Flugzeugabteil (16) mündet.

13. Anlage nach Anspruch 12, **dadurch gekennzeichnet, dass** der Behälter (20) mit mindestens einem Zuführmittel (12, 22) eines mit Druck beaufschlagten Gases in Kommunikation gebracht ist.

14. Anlage nach Anspruch 13, **dadurch gekennzeichnet, dass** mindestens ein Zuführmittel (12) mit den Mitteln zum Erzeugen (2) der Luft, die mit Inertgas angereichert ist, in Verbindung gebracht ist.

15. Anlage nach einem der Ansprüche 12 bis 14, **dadurch gekennzeichnet, dass** der Behälter (20) Wasser enthält.

16. Luftfahrzeug ausgestattet mit einer Anlage nach einem der Ansprüche 9 bis 15.

## Claims

1. Process for fighting a fire in a plane compartment (16), comprising a phase of detection (by 26) of the presence of the fire, and a phase of extinguishing of this fire, **characterized in that** the extinguishing phase comprises a phase of spraying (by 24), into the compartment (16), of an extinguishing fluid, as well as a phase of generation (by 2) of air enriched with inert gas, from a source of compressed air (5) internal to the plane, and a phase of admission (by 10) of at least part of this enriched air into the compartment (16).

2. Process according to Claim 1, **characterized in that** the air enriched with inert gas is generated by circulating said compressed air through permeable membranes (6).

3. Process according to Claim 1, **characterized in that** the air enriched with inert gas is generated by circulating the compressed air across molecular sieves.

4. Process according to one of Claims 1 to 3, **characterized in that** the air enriched with inert gas possesses an inert gas content of between 84 and 95%, preferably between 88 and 91%.

5. Process according to one of the preceding claims, **characterized in that** substantially the entirety of said air enriched with inert gas is admitted into the compartment.

6. Process according to one of the preceding claims, **characterized in that** the extinguishing fluid is a liquid and **in that** this extinguishing liquid is sprayed in atomized form into the compartment (16) by way of a pressurized gas.

7. Process according to Claim 6 or 7, **characterized in that** the extinguishing fluid is water.

8. Process according to Claim 6, **characterized in that** a fraction of said air enriched with inert gas is used in order to spray said extinguishing liquid in atomized form.

9. System for fighting a fire in a plane compartment (16), comprising means of detection (26) of the presence of said fire, and means of extinguishing (10, 20, 24) of this fire, **characterized in that** the extinguishing means comprise means of spraying (20, 24), within said compartment (16), of an extinguishing fluid, means of generation (2) of an air enriched with inert gas, from a source of compressed air (5) internal to the plane, and means of admission (8, 10) of at least part of this enriched air, within the compartment (16).

10. System according to Claim 9, **characterized in that** the means of generation comprise a separation apparatus (2) with permeable membranes (6).

11. System according to Claim 9, **characterized in that** the means of generation comprise a separation apparatus with molecular sieves.

12. System according to one of Claims 9 to 11, **characterized in that** the means of spraying comprise a reservoir (20) containing the extinguishing fluid, and a supply line (24) extending from the reservoir and emerging in the compartment (16).

13. System according to Claim 12, **characterized in that** the reservoir (20) is placed in communication with at least one means of feeding (12, 22) of a pressurized gas.

14. System according to Claim 13, **characterized in that** at least one means of feeding (12) is hooked up with the means of generation (2) of air enriched with inert gas.

15. System according to one of Claims 12 to 14, **characterized in that** the reservoir (20) contains water.

16. Aircraft equipped with a system according to one of Claims 9 to 15.
